## Europäisches Patentamt
## European Patent Office
## Office européen des brevets

(19)

(11) Numéro de publication: **0 228 924**
**B1**

(12) # FASCICULE DE BREVET EUROPEEN

(45) Date de publication du fascicule du brevet:
**03.01.90**

(51) Int. Cl.⁴: **H01G 4/38**

(21) Numéro de dépôt: **86402459.1**

(22) Date de dépôt: **04.11.86**

(54) **Condensateur multipiste.**

(30) Priorité: **05.11.85 FR 8516389**

(43) Date de publication de la demande:
**15.07.87 Bulletin 87/29**

(45) Mention de la délivrance du brevet:
**03.01.90 Bulletin 90/1**

(84) Etats contractants désignés:
**DE GB IT SE**

(56) Documents cités:
**EP-A- 0 109 100**
**GB-A- 759 026**

(73) Titulaire: **COMPAGNIE EUROPEENNE DE COMPOSANTS ELECTRONIQUES LCC, 50, rue Jean -Pierre Timbaud B.P. 301, F-92402 Courbevoie(FR)**

(72) Inventeur: **Mouries, Gérard, THOMSON-CSF SCPI 19, avenue de Messine, F-75008 Paris(FR)**

(74) Mandataire: **Guérin, Michel et al, THOMSON-CSF SCPI, F-92045 PARIS LA DEFENSE CEDEX 67(FR)**

ACTORUM AG

## Description

La présente invention se rapporte aux condensateurs du type multipiste et notamment aux condensateurs bobinés.

Des condensateurs bobinés multipistes sont déjà connus, par exemple par le document GB-A-759 026 qui décrit des condensateurs du type comprenant au moins trois électrodes séparées par des feuilles d'un diélectrique. Ces électrodes et ces feuilles de diélectrique sont disposées et enroulées de mainère à fournir plusieurs condensateurs individuels qui peuvent être associés en série pour former un condensateur équivalent supportant des tensions de service plus élevées qu'un condensateur classique de même emcombrement.

Ces condensateurs bobinés multipistes présentent un inconvénient sérieux constitué par la disposition même des électrodes qui induisent des points faibles amenant, par effet Corona, un risque de détérioration de ces condensateurs.

Afin de pallier ces inconvénients, l'invention propose de supprimer ces points faibles en modifiant la résistivité des électrodes dans des zones déterminées.

L'invention a donc pour objet un condensateur multipiste du type où la capacité du condensateur est obtenue par la mise en série interne d'au moins deux condensateurs individuels, le condensateur comprenant au moins un ruban diélectrique placé entre deux jeux d'électrodes, les électrodes comprenant des zones destinées à assurer l'effet capacitif et des zones de liaison destinées à assurer la mise en série interne ou les liaisons électriques avec les connexions externes du condensateur, caractérisé en ce que les zones assurant l'effet capacitif sont des zones à résistivité élevée par rapport aux zones de liaison qui sont à faible résistivité.

Les zones à faible résistivité peuvent avantageusement déborder sur les zones à résistivité élevée.

Les différences de résistivités peuvent avoir des origines diverses. Elles peuvent être consécutives à des différences d'épaisseur du matériau constituant les électrodes. Les électrodes peuvent être réalisées à partir de matériaux ayant des conductivités électriques différentes. On peut encore, pour augmenter la conductivité de certaines zones des électrodes, déposer un autre matériau conducteur sur le matériau constituant ces électrodes.

Il est avantageux d'obtenir de tels condensateurs multipistes par bobinage de rubans diélectrique métallisés et que les connexions du condensateur soient obtenues par "shoopage" (métallisation des faces latérales d'un condensateur par projection de métal pour former ces connexions externes, d'après la terminologie employée par l'homme de l'art).

L'invention sera mieux comprise et d'autres avantages apparaîtront au moyen de la description qui va suivre et des figures annexées parmi lesquelles:

- la figure 1 est une vue des sections de films métallisés d'un condensateur multipiste selon l'art connu,

- les figures 2 et 3 sont des vues des sections de films métallisés de condensateurs multipistes selon l'invention.

La description va porter plus précisément sur le cas des condensateurs bobinés à diélectrique métallisé. Cependant, l'invention s'applique également à d'autres types de condensateurs. Par exemple, elle peut s'appliquer aux condensateurs plissés ou à empilement ou aux condensateus dont les électrodes ne sont pas mécaniquement solidaires du diélectrique.

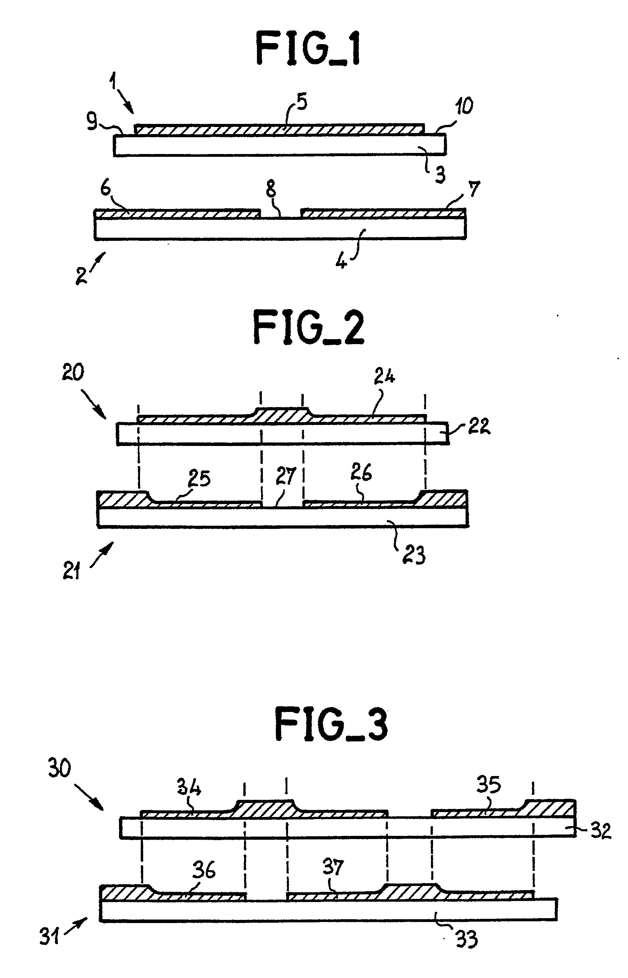

La figure 1 représente la disposition de films métallisés en vue de réaliser un condensateur multipiste selon l'art connu. Cette figure représente les sections de deux films 1 et 2 formés respectivement de rubans diélectriques 3 et 4. Le ruban 3 supporte une métallisation uniforme 5 tandis que la métallisation du ruban 4 est constituée de deux bandes parallèles 6 et 7 séparées par une zone non métallisée ou démétallisée 8. Le film 1 présente des marges latérales 9 et 10 qui éviteront les courts-circuits lors du "shoopage". On constate également que le film 1 est moins large que le film 2 afin que le "shoopage" prenne bien sur les métallisations 6 et 7. Les métallisations des films 1 et 2 sont réalisées différemment. La métallisation 5 est à haute résistivité pour assurer une auto-cicatrisation satisfaisante. Les métallisations 6 et 7 sont à faible résistivité pour assurer une bonne liaison électrique avec le "shoopage" donc un bon passage du courant. Ces différences de résistivités sont obtenues en déposant sur le ruban 3 une métallisation d'épaisseur plus faible que les métallisations du ruban 4.

Comme il a été mentionné plus haute, la zone non métallisée 8 crée, lorsque le condensateur est en fonctionnement, un effet de bord qui va user, par effet Corona, la zone centrale de la métallisation 5. La zone centrale de cette métallisation constitue donc un point chaud. A cet endroit, le courant est maximal d'où un risque de détérioration par emballement thermique de la zone centrale.

L'invention propose un nouveau type de métallisation : une métallisation à résistivité variable pour les deux films.

La figure 2 représente la disposition de films métallisés en vue de réaliser un condensateur multipiste selon l'invention. Cette figure représente les sections de deux films 20 et 21 formés respectivement de rubans diélectriques 22 et 23. Le diélectrique employé peut être un matériau fibreux tel le papier ou un matériau synthétique (polypropylène, polyester, etc.). Le ruban 22 supporte une métallisation unique 24 tandis que le métallisation du ruban 23 est constituée de deux bandes parallèles 25 et 26 séparées par une zone non métallisée ou démétallisée 27. Les métallisation peuvent être effectuées en aluminium, en zinc ou en un autre métal ou alliage. On constate que l'épaisseur des métallisation est variable. Les zones latérales ou marges des métallisations du film 21 sont plus épaisses que les zones situées vers l'intérieur du ruban 23. La zone centrale de la métallisation 24 du ruban 20 est également plus épaisse que le reste de la métallisation.

On obtient ainsi des métallisations à résistivité variable dans le sens de la largeur des rubans. La métallisation 24 est à haute résistivité sauf pour la zone centrale qui est à résistivité plus faible pour constituer une zone renforcée. Les métallisations 25 et 26 sont également à haute résistivité sauf pour les marges, desinées à assurer les contacts électriques avec les "shoopages", qui sont à faible résistivité. A titre d'exemple, les différences d'épaisseur pour une même métallisation peuvent être dans un rapport de un à quatre. Les métallisations des films 20 et 21 peuvent avoir des zones à haute résistivité d'épaisseur égales ou inégales. Il en va de même pour les zones à faible résistivité.

Pour assurer une auto-cicatrisation aisée, il est préférable que les bords de zones de métallisation à haute résistivité soient en correspondance avec des zones de métallisation à faible résistivité. C'est ce que montre les traits interrompus de la figure 2. L'usure par effet Corona affecte peu les zones à faible résistivité, l'épaisseur du métal étant relativement grande. Il n'y a donc pas de risque d'emballement thermique.

Comme pour l'art antérieur représenté à la figure 1, le film 21 est plus large que le film 20 de façon à assurer des débords métallisés pour le "shoopage".

Il entre dans le cadre de l'invention d'obtenir des métallisations à résistivité variable autrement que par des variations d'épaisseur d'une même métallisation. On peut par exemple envisager la solution de films recouverts d'une première métallisation comme pour la figure 1, puis de bandes d'un autre métal meilleur conducteur électrique que le premier métal déposé pour obtenir la configuration de la figure 2. Une autre solution serait de déposer des métaux de conductivités électriques différentes pour garder une épaisseur uniforme aux métallisations. On peut encore associer ces deux solutions : l'un des films étant réalisé selon la première solution et l'autre film selon la seconde solution.

L'usure par effet Corona se traduit par une dérive de capacité, les métallisations s'oxydant entrînent une diminution de la surface conductrice. Dans le cas de l'art antérieur, tel que celui représenté à la figure 1, cette usure entraîne également une augmentation des pertes par effet Joule du condensateur puisqu'il peut se produire des découpes de la zone centrale. Dans le cas de l'invention, il n'y a pas d'augmentation de ces pertes et le condensateur peut assurer correctement le passage du courant malgré son vieillissement. L'amélioration apportée par l'invention permet des tensions d'utilisation plus élevées puisque le gradient de tension peut passer de 30 $V_{eff}$ à 45 $V_{eff}$ et même plus.

L'invention ne se limite pas au cas de condensateurs à trois éléments tel que représenté à la figure 2, c'est-à-dire l'obtention d'un condensateur équivalent par la mise en série de deux condensateurs individuels. Les pistes peuvent être plus nombreuses pour obtenir un nombre plus élevé de condensateurs en série. C'est le case de la figure 3 où un condensateur équivalent est obtenu par la mise en série de trois condensateurs individuels. Sur cette figure, les références 30 et 31 désignent deux films vus en coupe qui sont formés respectivement à partir de rubans diélectriques 32 et 33. Le ruban 32 supporte les métallisations 34 et 35 formant des bandes parallèles. Le ruban 33 supporte les métallisations 36 et 37 formant également des bandes parallèles. Pour ce type de condensateur, à nombre impair de condensateurs individuels, les contacts par "shoopage" concernent les deux films. Les rubans peuvent alors être de largeur égale. Ils sont bobinés légèrement décalés pour assurer un "shoopage" efficace grâce au débord des électrodes 35 et 36. Les traits interrompus sur la figure 3 montrent que les bords de zones de métallisation à haute résistivité sont en correspondance avec des zones de métallisation à basse résistivité.

**Revendications**

1. Condensateur multipiste du type où la capacité du condensateur est obtenue par la mise en série interne d'au moins deux condensateurs individuels, le condensateur comprenant au moins un ruban diélectrique (22) placé entre deux jeux d'électrodes (24, 25, 26), les électrodes comprenant des zones destinées à assurer l'effet capacitif et des zones de liaison destinées à assurer la mise en série interne ou les liaison électriques avec les connexions externes du condensateur, caractérisé en ce que les zones assurant l'effet capacitif sont des zones à résistivité élevée par rapport aux zones de liaison qui sont à faible résistivité.

2. Condensateur multipiste selon la revendication 1, caractérisé en ce que les zones à faible résistivité débordent sur les zones à résistivité élevée.

3. Condensateur multipiste selon l'une des revendications 1 ou 2, caractérisé en ce que les différences de résistivités entre les différentes zones sont dues à des différences d'épaisseur de ces zones.

4. Condensateur multipiste selon l'une des revendications 1 ou 2, caractérisé en ce que les différences de résistivités sont dues à l'utilisation de matériaux conducteurs de résistivités différentes.

5. Condensateur multipiste selon l'une des revendications 1 ou 2, caractérisé en ce que les différences de résistivités sont dues à un second matériau conducteur surajouté à un premier matériau conducteur.

6. Condensateur multipiste selon l'une quelconque des revendications 1 à 5, caractérisé en ce que les électrodes (24, 25, 26) sont obtenues par métallisation d'un diélectrique (22, 23).

7. Condensateur multipiste selon l'une quelconque des revendications 1 à 6, caractérisé en ce que les liaisons électriques avec les connexions externes se font par "shoopage".

8. Condensateur multipiste selon la revendication 7, caractérisé en ce que des marges latérales sont prévues sur cetains rubans pour éviter les courts-circuits lors du "shoopage".

9. Condensateur multipiste selon l'une quelconque des revendications 1 à 8, caractérisé en ce que les rubans sont alternativement décalés dans le cas d'un nombre impair de condensateurs individuels.

10. Condensateur multipiste selon l'une quelconque des revendications 1 à 8, caractérisé en ce que les rubans sont de deux largeurs possibles, un ruban d'une certaine largeur étant compris entre deux rubans d'une autre largeur.

11. Condensateur multipiste selon l'une quelconque des revendications 1 à 10, caractérisé en ce qu'il est obtenu par bobinage.

**Patentansprüche**

1. Mehrbahnenkondensator von dem Typ, bei dem die Kapazität durch die interne Serienschaltung von zumindest zwei einzelnen Kondensatoren erreicht wird, wobei der Kondensator zumindest ein dielektrisches Band (22) aufweist, das sich zwischen zwei Sätzen von Elektroden (24, 25, 26) befindet, wobei die Elektroden Bereiche umfassen, die dazu bestimmt sind, für die kapazitive Wirkung zu sorgen, und Verbindungsbereiche, die dazu bestimmt sind, für die interne Serienschaltung oder die elektrischen Verbindungen mit den Außenanschlüssen des Kondensators zu sorgen, dadurch gekennzeichnet, daß die Bereiche, welche für die kapazitive Wirkung sorgen, Bereiche mit hohem spezifischen Widerstand sind, verglichen mit den Verbindungsbereichen, die einen geringen spezifischen Widerstand haben.

2. Mehrbahnenkondensator nach Anspruch 1, dadurch gekennzeichnet, daß die Bereiche mit geringem spezifischen Widerstand in die Bereiche mit hohem spezifischen Widerstand übergreifen.

3. Mehrbahnenkondensator nach einem der Ansprüche 1 oder 2, dadurch gekennzeichnet, daß die Unterschiede im spezifischen Widerstand zwischen den verschiedenen Bereichen auf die Unterschiede in der Dicke dieser Bereiche zurückzuführen sind.

4. Mehrbahnenkondensator nach einem der Ansprüche 1 oder 2, dadurch gekennzeichnet, daß die Unterschiede im spezifischen Widerstand auf die Verwendung von leitendem Material mit unterschiedlichen spezifischen Widerstand zurückzuführen sind.

5. Mehrbahnenkondensator nach einem der Ansprüche 1 oder 2, dadurch gekennzeichnet, daß die Unterschiede im spezifischen Widerstand auf ein zweites leitendes Material zurückzuführen sind, das einem ersten leitenden Material hinzugefügt wurde.

6. Mehrbahnenkondensator nach einem der Ansprüche 1 bis 5, dadurch gekennzeichnet, daß die Elektroden (24, 25, 26) durch Metallüberzug eines Dielektrikums (22, 23) erhalten werden.

7. Mehrbahnenkondensator nach einem der Ansprüche 1 bis 6, dadurch gekennzeichnet, daß die elektrischen Verbindungen mit den Außenanschlüssen des Kondensators über "Schoopieren" erfolgen.

8. Mehrbahnenkondensator nach Anspruch 7, dadurch gekennzeichnet, daß auf bestimmten Bändern seitliche Spielräume vorgesehen sind, um Kurzschlüsse beim "Schoopieren" zu vermeiden.

9. Mehrbahnenkondensator nach einem der Ansprüche 1 bis 8, dadurch gekennzeichnet, daß die Bänder im Fall einer ungeraden Anzahl von einzelnen Kondensatoren abwechselnd versetzt sind.

10. Mehrbahnenkondensator nach einem der Ansprüche 1 bis 8, dadurch gekennzeichnet, daß die Bänder zwei mögliche Breiten aufweisen, wobei sich ein Band von einer gewissen Breite zwischen zwei Bändern von unterschiedlicher Breite befindet.

11. Mehrbahnenkondensator nach einem der Ansprüche 1 bis 10, dadurch gekennzeichnet, daß er durch Wicklung erhalten wird.

**Claims**

1. A multitrack capacitor of the type in which the capacitance of the capacitor is produced by placing at least two individual capacitors internally in series, the capacitor comprising at least one dielectric tape (22) placed between two sets of electrodes (24, 25 and 26), the electrodes comprising zones destined to ensure the capacitive effect and connection zones destined to ensure the placing internally in series or the electrical connections with the external connections of the capacitor, characterized in that the zones ensuring the capacitive effect are zones having a high specific resistance in relation to the zones of connection which have a low specific resistance.

2. The multitrack capacitor as claimed in claim 1, characterized in that the zones with the low specific resistance overlap onto the zones with a high specific resistance.

3. The multitrack capacitor as claimed in claim 1 or claim 2, characterized in that the differences in specific resistance between the different zones are due to differences in thickness of these zones.

4. The multitrack capacitor as claimed in claim 1 or claim 2, characterized in that the differences in specific resistance are due to the use of conducting materials having difference specific resistances.

5. The multitrack capacitor as claimed in claim 1 or in claim 2, characterized in that the differences of specific resistance are due to a second conducting material added to a first conducting material.

6. The multitrack capacitor as claimed in any one of the claims 1 through 5, characterized in that the electrodes (24, 25 and 26) are produced by metallization of a dielectric (22 and 23).

7. The multitrack capacitor as claimed in any one of the claims 1 through 6, characterized in that the electrical connections with the external connections are made by "shoopage".

8. The multitrack capacitor as claimed in claim 7, characterized in that lateral margins are provided on certain tapes in order to avoid short circuits during "shoopage".

9. The multitrack capacitor as claimed in any one of the claims 1 through 8, characterized in that the tapes are alternatively offset in the case of there being an uneven number of individual capacitors.

10. The multitrack capacitor as claimed in any one of the claims 1 through 8, characterized in that the tapes have two possible widths, one tape of a certain width being placed between tapes of another width.

11. The multitrack capacitor as claimed in any one of the claims 1 through 10, characterized in that it is produced by winding.

# FIG_1

# FIG_2

# FIG_3